# EUROPEAN PATENT APPLICATION

(11) **EP 4 656 462 A1**
(43) Date of publication of application: **03.12.2025**
(21) Application number: 23918099.5
(22) Date of filing: 28.01.2023
(51) Int. Cl.: B60R 16/037

(54) **CONTROL METHOD AND APPARATUS, AND TRANSPORT**

(71) Applicant: Shenzhen Yinwang Intelligent Technologies Co., Ltd., Shenzhen, Guangdong 518110 (CN)
(72) Inventor: WANG, Di, Shenzhen, Guangdong 518129 (CN); WANG, Junjie, Shenzhen, Guangdong 518129 (CN); HU, Liang, Shenzhen, Guangdong 518129 (CN); ZHENG, Shengrui, Shenzhen, Guangdong 518129 (CN); YANG, Jinghuan, Shenzhen, Guangdong 518129 (CN); SONG, Xianxi, Shenzhen, Guangdong 518129 (CN)
(74) Representative: Gill Jennings & Every LLP
(86) International application number: PCT/CN2023/073532
(87) International publication number: WO 2024/156092

(57) **Abstract**

A control method and apparatus, and a transportation means are provided, and relate to the field of intelligent cockpits. The method may be applied to a cockpit of the transportation means, and includes: when it is detected that a mode related to user resting in the cockpit is enabled, controlling one or more devices of a seat, a fragrance, a sound-generation apparatus, a light apparatus, an air conditioner, and a display apparatus in the cockpit to be adjusted to a preset state; obtaining human body posture information; and controlling, based on the human body posture information, the one or more devices to be adjusted from the preset state to another state. Embodiments may be applied to an intelligent vehicle or an electric vehicle, to help improve driving experience of a user, and also help improve intelligence of the transportation means.

## Description

### TECHNICAL FIELD

This application relates to the field of intelligent cockpits, and more specifically, to a control method and apparatus, and a transportation means.

### BACKGROUND

With development of vehicle intelligence, an increasing quantity of vehicles are configured with a mode that helps a user relax or rest, for example, a nap mode. Currently, after entering the nap mode, the vehicle adjusts a device in a cockpit to a configured state based on a manual pre-configuration of the user. When the user needs to adjust a state of the device, the user needs to perform cumbersome manual adjustment. This affects driving experience of the user.

### SUMMARY

Embodiments of this application provide a control method and apparatus, and a transportation means, so that a state of a cockpit device in a first mode can be automatically adjusted based on human body posture information. This helps improve driving experience of a user, and also helps improve intelligence of the transportation means.

The transportation means in this application may include a road transportation means, a water transportation means, an air transportation means, an industrial device, an agricultural device, an entertainment device, or the like. For example, the transportation means may be a vehicle in a broad sense, and may be a vehicle (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application. For another example, the transportation means may be a vehicle like an aircraft or a ship.

According to a first aspect, a control method is provided, applied to a cockpit of a transportation means, where the cockpit includes a cockpit device, and the cockpit device includes at least one of a seat, a fragrance, a sound-generation apparatus, a light apparatus, an air conditioner, and a display apparatus. The method includes: when it is detected that a first mode is enabled, controlling the cockpit device to be in a first state, where the first mode is a mode related to user resting in the cockpit; obtaining human body posture information; and controlling, based on the human body posture information, the cockpit device to be adjusted from the first state to a second state.

In embodiments of this application, a state of the cockpit device in the first mode may be automatically adjusted based on the human body posture information. A head unit may make an adjustment decision independently based on the human body posture information, or may adjust the cockpit device based on indication information included in the human body posture information. This helps improve driving experience of a user, and also helps improve intelligence of the transportation means.

In some possible implementations, the human body posture information includes a gesture posture or a torso posture.

For example, the gesture posture includes a mid-air gesture. For example, the gesture posture may be a hover gesture, and the hover gesture is a gesture in which five fingers of the user stretch and a palm faces the display apparatus. For another example, the gesture posture may be a hand waving gesture, for example, a left-to-right waving gesture, or an up-to-down waving gesture.

For example, the torso posture may include a head posture and a limb posture of the user. For example, the head posture may include a facial posture. It may be determined, based on the facial posture, that the user is in an eye-open state or an eye-closed state. For another example, the limb posture includes postures of two arms and two legs of the user. A change frequency of the limb posture within preset duration starting from time when the user enters a sleep state may be determined based on data collected by a sensor in the cockpit, so that it may be determined whether the user is in a non-comfort state or a comfort state.

That the cockpit device is in the first state may include that the seat is at a first angle, a type of the fragrance is a first type, the sound-generation apparatus is at a first volume, the light apparatus is at first luminance, the air conditioner is at a first temperature or at a first air exhaust speed, the display apparatus is at second luminance, and the like. The adjusting the cockpit device from the first state to the second state may include: adjusting an angle of the seat to a second angle, adjusting a type of the fragrance to a second type, adjusting a volume of the sound-generation apparatus to a second volume, adjusting luminance of the light apparatus to third luminance, adjusting a temperature of the air conditioner to a second temperature, adjusting an air exhaust speed of the air conditioner to a second air exhaust speed, adjusting luminance of the display apparatus to fourth luminance, and the like.

In some possible implementations, the second state adapts to the human body posture information.

That the second state adapts to the human body posture may also be understood as that a comfort degree of the user in the cockpit with the cockpit device in the second state is greater than a comfort degree of the user in the cockpit with the cockpit device in the first state.

With reference to the first aspect, in some implementations of the first aspect, the first mode is a nap mode, a sleep mode, a rest mode, or a camping mode.

With reference to the first aspect, in some implementations of the first aspect, the method further includes: obtaining a sleep comfort degree, where the sleep comfort degree indicates a comfort degree or a sleep depth of the user in a sleep state; and the controlling, based on the human body posture information, the cockpit device to be adjusted from the first state to a second state includes: controlling, based on the human body posture information and the sleep comfort degree, the cockpit device to be adjusted from the first state to the second state.

In embodiments of this application, the head unit may automatically adjust the state of the cockpit device in the first mode based on the human body posture information and the sleep comfort degree, and the user does not need to perform manual adjustment. This helps improve driving experience of the user, and also helps improve intelligence of the transportation means. In addition, the state of the cockpit device in the first mode is adjusted with reference to the sleep comfort degree. This helps improve sleep quality of the user in the sleep state.

In some possible implementations, the sleep comfort degree indicates a comfort degree of the user in the sleep state. For example, the comfort degree of the user in the sleep state includes that the user is in a comfort state or a non-comfort state in the sleep state. In some possible implementations, the sleep comfort degree may indicate a sleep depth of the user in the sleep state. For example, the sleep depth may include a light sleep state and a deep sleep state.

In some possible implementations, the obtaining a sleep comfort degree includes: when the human body posture information indicates that the user is in the sleep state, obtaining the sleep comfort degree.

In embodiments of this application, the sleep comfort degree of the user is obtained when it is determined, based on the human body posture information, that the user is in the sleep state. This avoids determining the sleep comfort degree based on data collected by a sensor in the cockpit or data sent by a wearable device when the user is in a non-sleep state, to help reduce calculation overheads of the transportation means, and help reduce power consumption of the transportation means.

In some possible implementations, the human body posture information used to determine whether the user is in the sleep state includes a human eye-open/closed state and/or a head angle.

With reference to the first aspect, in some implementations of the first aspect, the obtaining a sleep comfort degree includes: determining the sleep comfort degree based on first data collected by a sensor in the cockpit; or receiving second data sent by a wearable device, and determining the sleep comfort degree based on the second data.

In embodiments of this application, the sleep comfort degree of the user may be determined based on the data collected by the sensor in the cockpit, or the sleep comfort degree of the user may be determined based on the data sent by the wearable device. In this way, the state of the cockpit device in the first mode is adjusted with reference to the sleep comfort degree. This helps improve sleep quality of the user in the sleep state.

In some possible implementations, the sensor in the cockpit includes a camera and/or a millimeter-wave radar.

For example, the obtaining a sleep comfort degree includes: when it is determined, based on the first data collected by the sensor in the cockpit within the preset duration starting from the time when the user enters the sleep state, that a quantity of change times of the torso posture of the user is greater than or equal to a preset quantity of times, determining that the user is in the non-comfort state; or when it is determined, based on the first data collected by the sensor within the preset duration starting from the time when the user enters the sleep state, that a quantity of change times of the torso posture of the user is less than the preset quantity of times, determining that the user is in the comfort state.

For example, the obtaining a sleep comfort degree includes: determining a physiological parameter of the user based on the first data collected by the sensor or the second data sent by the wearable device within the preset duration starting from the time when the user enters the sleep state, where the physiological parameter includes a heartbeat frequency and/or a breathing frequency; and determining, based on the physiological parameter, whether the user is in the deep sleep state or the light sleep state.

In some possible implementations, the obtaining a sleep comfort degree includes: determining the sleep comfort degree based on the first data collected by the sensor in the cockpit and the second data sent by the wearable device.

For example, the breathing frequency of the user may be determined as a first frequency based on the first data collected by the millimeter-wave radar in the cockpit, and the breathing frequency of the user may be determined as a second frequency based on the second data sent by the wearable device. Therefore, it may be determined, based on the first frequency and the second frequency, whether the user is in the deep sleep state or the light sleep state. For example, it may be determined, based on an average value of the first frequency and the second frequency, whether the user is in the deep sleep state or the light sleep state.

With reference to the first aspect, in some implementations of the first aspect, the cockpit device includes the air conditioner and a temperature of the air conditioner is a first temperature when the cockpit device is in the first state, and the controlling, based on the human body posture information and the sleep comfort degree, the cockpit device to be adjusted from the first state to the second state includes: when the human body posture information indicates that the user is in the sleep state, controlling, based on the sleep comfort degree, the temperature of the air conditioner to be adjusted from the first temperature to a second temperature.

In embodiments of this application, when the user is in the sleep state, the temperature of the air conditioner may be adjusted based on the sleep comfort degree of the user, to help improve sleep quality of the user in the sleep state. For example, after the user enters the deep sleep state, a body temperature of the user also changes accordingly. The temperature of the air conditioner is adjusted, so that the user can be prevented from being woken up due to cold or heat in the deep sleep state, which affects sleep quality of the user.

In some possible implementations, an air velocity of the air conditioner is a first air velocity in the first state, and the controlling, based on the human body posture information and the sleep comfort degree, the cockpit device to be adjusted from the first state to the second state includes: when the human body posture information indicates that the user is in the sleep state, controlling, based on the sleep comfort degree, the air velocity of the air conditioner to be adjusted from the first air velocity to a second air velocity.

In embodiments of this application, when the user is in the sleep state, the air velocity of the air conditioner may be adjusted based on the sleep comfort degree of the user, to help improve sleep quality of the user in the sleep state. For example, when the first mode is just entered, the air velocity of the air conditioner is large. After the user enters the deep sleep state, if the large wind air velocity is kept, body heat comfort and body surface skin dryness of the user are affected. The air velocity of the air conditioner is adjusted and decreased, so that the body heat comfort and body surface skin comfort of the user in the deep sleep state can be improved, thereby improving sleep quality of the user.

In some possible implementations, an air exhaust direction of the air conditioner is a first direction in the first state, and the controlling, based on the human body posture information and the sleep comfort degree, the cockpit device to be adjusted from the first state to the second state includes: when the human body posture information indicates that the user is in the sleep state, controlling, based on the sleep comfort degree, the air exhaust direction of the air conditioner to be adjusted from the first direction to a second direction.

With reference to the first aspect, in some implementations of the first aspect, the cockpit device includes the sound-generation apparatus and a volume of the sound-generation apparatus is a first volume when the cockpit device is in the first state, and the controlling, based on the human body posture information and the sleep comfort degree, the cockpit device to be adjusted from the first state to the second state includes: when the human body posture information indicates that the user is in the sleep state, based on the sleep comfort degree, controlling the volume of the sound-generation apparatus to be adjusted from the first volume to a second volume, or turning off the sound-generation apparatus, where the second volume is less than the first volume.

In embodiments of this application, when the user is in the sleep state, the volume of the sound-generation apparatus may be lowered or the sound-generation apparatus may be turned off based on the sleep comfort degree of the user, to avoid disturbance to the user due to an excessively high volume. This helps improve sleep quality of the user, and improves driving experience of the user.

With reference to the first aspect, in some implementations of the first aspect, the cockpit device includes the seat, and the controlling, based on the human body posture information, the cockpit device to be adjusted from the first state to a second state includes: controlling a state of the seat massage function based on the human body posture information.

In embodiments of this application, the state of the seat massage function may be automatically adjusted based on the human body posture information. For example, the seat massage function is in a disabled state when the first mode is enabled. When the human body posture information indicates that the user cannot enter the sleep state for long time, the seat massage function may be automatically enabled, to help the user relax, so that the user can enter the sleep state as soon as possible. When the human body posture information indicates that the user enters the sleep state, the seat massage function may be disabled, or massage strength of the seat massage function is controlled to be decreased. This helps avoid disturbance caused by seat massage to the user after the user enters the sleep state, and helps improve sleep quality of the user.

With reference to the first aspect, in some implementations of the first aspect, the method further includes: prompting the user to enable the seat massage function.

In embodiments of this application, before the state of the seat massage function is controlled to be enabled, the user may be further prompted to enable the seat massage function. In this way, the user may not be disturbed when the seat massage function is automatically enabled, and driving experience of the user is improved.

In some possible implementations, before the prompting the user to enable the seat massage function, the method further includes: determining, within preset duration starting from time when the cockpit device is in the first state, that the quantity of change times of the torso posture of the user is greater than or equal to the preset quantity of times, and the prompting the user to enable the seat massage function includes: prompting the user to enable the seat massage function when the first mode ends.

In embodiments of this application, statistics may be collected on the quantity of times or a change frequency of the torso posture of the user within the preset duration starting from the time when the cockpit device is in the first state. For example, if the change frequency of the torso posture of the user within the preset duration starting from the time when the cockpit device is in the first state is excessively large, it may be considered that the user is in an uncomfortable state. When the first mode ends, the user may be actively prompted to enable the seat massage function, to help the user relax, and help alleviate uncomfortable feeling of the user.

With reference to the first aspect, in some implementations of the first aspect, the human body posture information includes an eye status of the user, the cockpit device includes the display apparatus and luminance of the display apparatus is first luminance when the cockpit device is in the first state, and the controlling, based on the human body posture information, the cockpit device to be adjusted from the first state to a second state includes: when the eye status indicates that the user is in an eye-closed state, controlling the luminance of the display apparatus to be adjusted from the first luminance to second luminance, or turning off the display apparatus, where the second luminance is less than the first luminance.

In embodiments of this application, when the user is in the eye-closed state, the luminance of the display apparatus may be decreased or the display apparatus may be turned off. In this way, the luminance of the display apparatus is decreased, to help promote sleep of the user, and help improve driving experience of the user.

In some possible implementations, the method further includes: before it is detected that the first mode is enabled, controlling the luminance of the display apparatus to be third luminance, where the third luminance is higher than the first luminance; when it is detected that the first mode is enabled, controlling the luminance of the display apparatus to be adjusted from the third luminance to the first luminance; and when the human body posture information indicates that the user is in the sleep state, controlling the luminance of the display apparatus to be adjusted from the first luminance to the second luminance.

In some possible implementations, when the human body posture information indicates that eyes of the user change from the eye-open state to the eye-closed state, the luminance of the display apparatus is controlled to be adjusted from the first luminance to the second luminance.

With reference to the first aspect, in some implementations of the first aspect, the human body posture information includes a first gesture posture of the user, and the controlling, based on the human body posture information, the cockpit device to be adjusted from the first state to a second state includes: controlling, based on the first gesture posture, the cockpit device to be adjusted from the first state to the second state.

In embodiments of this application, the state of the cockpit device in the first mode may be adjusted based on the gesture posture. This helps improve driving experience of the user and also helps improve intelligence of the transportation means. For example, in the first mode, a seat angle of the user is adjusted to a lying-down state. In this case, if the user needs to lower the volume of the sound-generation apparatus, the user does not need to rise to operate the display apparatus to lower the volume, but may directly lower the volume by using a gesture posture in the lying-down state, so that a manner of lowering the volume is user-friendly.

With reference to the first aspect, in some implementations of the first aspect, the cockpit includes a first area, the user is located in the first area, and the controlling, based on the first gesture posture, the cockpit device to be adjusted from the first state to the second state includes: controlling, based on the first gesture posture, a device that is in the cockpit device and that is associated with the first area to be adjusted from the first state to the second state.

In embodiments of this application, when there are a plurality of users in the cockpit in the first mode, a state of a device that is in the cockpit device and that is associated with the first area may be adjusted based on a gesture posture of the user in the first area. In this way, fine control of different areas in the cockpit can be implemented, and when the user in the first area expects to adjust a state of a device that is in the cockpit device and that is associated with the first area, a user in a second area in the cockpit is not disturbed. This helps improve driving experience of a plurality of users in the first mode, and also helps improve intelligence of the transportation means.

For example, the transportation means is a vehicle. The first area may be a driver area or a front passenger area. The driver area may be an area in which a driver seat is located, and the front passenger area may be an area in which a front passenger seat is located. For example, when the first area is the driver area, the device associated with the first area may include a seat in the driver area, an air conditioner in the driver area, an instrument panel, an atmosphere light in the driver area, a speaker on a vehicle door in the driver area, a headrest speaker on the seat in the driver area, and the like.

With reference to the first aspect, in some implementations of the first aspect, duration of the first mode is first duration, and the method further includes: when the first duration ends, prompting, by using an alarm, the user to disable the first mode; and based on a second gesture posture of the user, controlling the alarm to be turned off, or controlling the alarm to perform delay prompt.

When the user is woken up by the alarm, emotion and awareness of the user are usually in an unclear state. In this case, if the user performs an operation on the display apparatus to turn off the alarm non-user-friendliness and inconvenience are caused to the user. In embodiments of this application, when the duration of the first mode ends, the alarm may be turned off by using the second gesture posture, or the alarm may be controlled, by using the second gesture posture, to perform delay prompt. This prevents the user from turning off the alarm or delaying prompt by using a tap operation on the display apparatus, facilitates the user in turning off the alarm or controlling the alarm to perform delay prompt in time, and also makes a manner of turning off the alarm or controlling the alarm to perform delay prompt user-friendly.

In some possible implementations, the controlling the alarm to be turned off includes: when a hover gesture of the user is detected, controlling the alarm to be turned off.

In some possible implementations, the hover gesture is a gesture in which five fingers of the user stretch and a palm faces the display apparatus.

In some possible implementations, the controlling the alarm to perform delay prompt includes: when a leftward-slide gesture or a rightward-slide gesture of the user is detected, controlling the alarm to perform delay prompt.

In some possible implementations, the user sits on a first seat in the first area, and before it is detected that the first mode is enabled, it is determined, based on a user operation of setting an angle of the first seat in advance or based on a state of the first seat before previous exiting of the first mode, that the angle of the first seat is controlled to be a first angle when the first mode is enabled. The method further includes: when it is detected that the first mode is enabled, detecting whether a user is on a second seat; and when the user is on the second seat and the user on the second seat is affected when the angle of the first seat is adjusted to the first angle, controlling the angle of the first seat to be adjusted to a second angle, where the second seat is a seat located behind the first seat and adjacent to the first seat, and the second angle is less than the first angle.

In embodiments of this application, when the first mode is enabled, presence or absence of a user on the second seat on a rear side of the first seat may be detected. If there is a user on the second seat and the user on the second seat is affected when the angle of the first seat is adjusted to the first angle, the angle of the first seat may be controlled to be adjusted to the second angle. In this way, after the first mode is entered, inconvenience caused by the state of the first seat to the user on the second seat is avoided, driving experience of a plurality of users in the cockpit is improved, and the intelligent degree of the transportation means is also improved.

The angle of the first seat may be an angle formed between a cushion of the first seat and a back of the first seat.

According to a second aspect, a control apparatus is provided, where the apparatus includes: a detection unit, configured to detect that a first mode is enabled, where the first mode is a mode related to user resting in a cockpit of a transportation means, the cockpit includes a cockpit device, and the cockpit device includes at least one of a seat, a fragrance, a sound-generation apparatus, a light apparatus, an air conditioner, and a display apparatus; a control unit, configured to control the cockpit device to be in a first state; and an obtaining unit, configured to obtain human body posture information, where the control unit is further configured to control, based on the human body posture information, the cockpit device to be adjusted from the first state to a second state.

With reference to the second aspect, in some implementations of the second aspect, the obtaining unit is further configured to obtain a sleep comfort degree, where the sleep comfort degree indicates a comfort degree or a sleep depth of a user in a sleep state; and the control unit is further configured to control, based on the human body posture information and the sleep comfort degree, the cockpit device to be adjusted from the first state to the second state.

With reference to the second aspect, in some implementations of the second aspect, the obtaining unit is configured to determine the sleep comfort degree based on first data collected by a sensor in the cockpit; or receive second data sent by a wearable device, and determine the sleep comfort degree based on the second data.

With reference to the second aspect, in some implementations of the second aspect, the cockpit device includes the air conditioner and a temperature of the air conditioner is a first temperature when the cockpit device is in the first state, and the control unit is configured to: when the human body posture information indicates that the user is in the sleep state, control, based on the sleep comfort degree, the temperature of the air conditioner to be adjusted from the first temperature to a second temperature.

With reference to the second aspect, in some implementations of the second aspect, the cockpit device includes the sound-generation apparatus and a volume of the sound-generation apparatus is a first volume when the cockpit device is in the first state, and the control unit is configured to: when the human body posture information indicates that the user is in the sleep state, based on the sleep comfort degree, control the volume of the sound-generation apparatus to be adjusted from the first volume to a second volume, or turn off the sound-generation apparatus, where the second volume is less than the first volume.

With reference to the second aspect, in some implementations of the second aspect, the cockpit device includes the seat, and the control unit is configured to: control a state of the seat massage function based on the human body posture information.

With reference to the second aspect, in some implementations of the second aspect, the apparatus further includes a first prompt unit, configured to prompt the user to enable the seat massage function.

With reference to the second aspect, in some implementations of the second aspect, the human body posture information includes an eye status of the user, the cockpit device includes the display apparatus and luminance of the display apparatus is first luminance when the cockpit device is in the first state, and the control unit is configured to: when the eye status indicates that the user is in an eye-closed state, control the luminance of the display apparatus to be adjusted from the first luminance to second luminance, or turn off the display apparatus, where the second luminance is less than the first luminance.

With reference to the second aspect, in some implementations of the second aspect, the human body posture information includes a first gesture posture of the user, and the control unit is configured to control, based on the first gesture posture, the cockpit device to be adjusted from the first state to the second state.

With reference to the second aspect, in some implementations of the second aspect, the cockpit includes a first area, the user is located in the first area, and the control unit is configured to control, based on the first gesture posture, a device that is in the cockpit device and that is associated with the first area to be adjusted from the first state to the second state.

With reference to the second aspect, in some implementations of the second aspect, duration of the first mode is first duration, and the apparatus further includes: a second prompt unit, configured to: when the first duration ends, prompt, by using an alarm, the user to disable the first mode, where the control unit is further configured to: based on a second gesture posture of the user, control the alarm to be turned off, or control the alarm to perform delay prompt.

With reference to the second aspect, in some implementations of the second aspect, the second state adapts to the human body posture information.

With reference to the second aspect, in some implementations of the second aspect, the first mode is a nap mode, a sleep mode, a rest mode, or a camping mode.

According to a third aspect, a control apparatus is provided, where the control apparatus includes a processing unit and a storage unit, the storage unit is configured to store instructions, and the processing unit executes the instructions stored in the storage unit, so that the control apparatus performs any possible method in the first aspect.

According to a fourth aspect, a control system is provided, where the system includes a cockpit device and a computing platform. The computing platform includes any possible control apparatus in the second aspect or the third aspect, and the cockpit device includes at least one of a seat, a fragrance, a sound-generation apparatus, a light apparatus, an air conditioner, and a display apparatus.

In some possible implementations, the control system further includes one or more sensors.

According to a fifth aspect, a transportation means is provided, where the transportation means includes any possible control apparatus in the second aspect, or includes the control apparatus in the third aspect, or includes the control system in the fourth aspect.

In some possible implementations, the transportation means is a vehicle.

According to a sixth aspect, a computer program product is provided, where the computer program product includes computer program code. When the computer program code is run on a computer, the computer is enabled to perform any possible method in the first aspect.

It should be noted that all or some of the computer program code may be stored in a first storage medium, where the first storage medium may be encapsulated together with a processor, or may be encapsulated separately from a processor. This is not specifically limited in embodiments of this application.

According to a seventh aspect, a computer-readable medium is provided, where the computer-readable medium stores program code. When the computer program code is run on a computer, the computer is enabled to perform any possible method in the first aspect.

According to an eighth aspect, an embodiment of this application provides a chip system. The chip system includes a processor, configured to invoke a computer program or computer instructions stored in a memory, so that the processor is enabled to perform any possible method in the first aspect.

With reference to the eighth aspect, in a possible implementation, the processor is coupled to the memory through an interface.

With reference to the eighth aspect, in a possible implementation, the chip system further includes the memory, and the memory stores the computer program or the computer instructions.

In embodiments of this application, the state of the cockpit device in the first mode may be automatically adjusted based on the human body posture information. This helps improve driving experience of the user and also helps improve intelligence of the transportation means.

The state of the cockpit device in the first mode is adjusted with reference to the sleep comfort degree. This helps improve sleep quality of the user in the sleep state. When the user is in the sleep state, the temperature of the air conditioner may be adjusted based on the sleep comfort degree of the user, to help improve sleep quality of the user in the sleep state.

When the user is in the sleep state, the air velocity of the air conditioner may be adjusted based on the sleep comfort degree of the user, so that the body heat comfort and body surface skin comfort of the user in the deep sleep state can be improved, thereby improving sleep quality of the user.

When the user is in the sleep state, the volume of the sound-generation apparatus may be lowered or the sound-generation apparatus may be turned off based on the sleep comfort degree of the user, to avoid disturbance to the user due to an excessively high volume. This helps improve sleep quality of the user, and improves driving experience of the user.

When the human body posture information indicates that the user cannot enter the sleep state for long time, the seat massage function may be automatically enabled, to help the user relax, so that the user can enter the sleep state as soon as possible. When the human body posture information indicates that the user enters the sleep state, the seat massage function may be disabled, or massage strength of the seat massage function is controlled to be decreased. This helps avoid disturbance caused by seat massage to the user after the user enters the sleep state, and helps improve sleep quality of the user.

The state of the cockpit device in the first mode may be adjusted based on the gesture posture. This helps improve driving experience of the user and also helps improve intelligence of the transportation means.

When there are a plurality of users in the cockpit in the first mode, a state of a device that is in the cockpit device and that is associated with the first area may be adjusted based on a gesture posture of the user in the first area. In this way, fine control of different areas in the cockpit can be implemented, and when the user in the first area expects to adjust a state of a device that is in the cockpit device and that is associated with the first area, a user in a second area in the cockpit is not disturbed.

When the duration of the first mode ends, the alarm may be turned off by using the second gesture posture, or the alarm may be controlled, by using the second gesture posture, to perform delay prompt. This prevents the user from turning off the alarm or delaying prompt by using a tap operation on the display apparatus, facilitates the user in turning off the alarm or controlling the alarm to perform delay prompt in time, and also makes a manner of turning off the alarm or controlling the alarm to perform delay prompt user-friendly.

### BRIEF DESCRIPTION OF DRAWINGS

FIG. 1 is a functional block diagram of a transportation means according to an embodiment of this application;
FIG. 2 is a functional block diagram of a vehicle according to an embodiment of this application;
FIG. 3 is a diagram of display distribution in a vehicle cockpit according to an embodiment of this application;
FIG. 4 is a schematic flowchart of a control method according to an embodiment of this application;

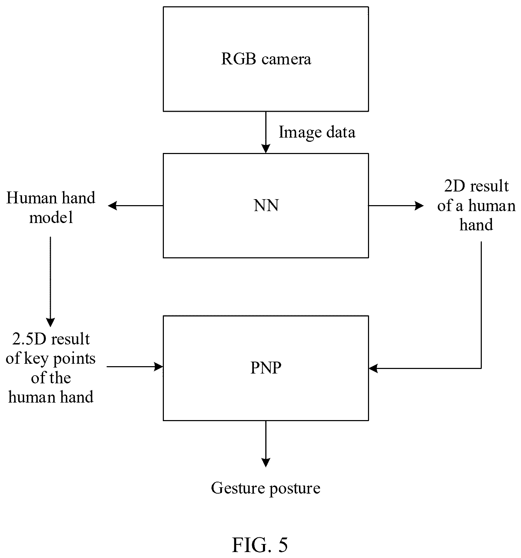

FIG. 5 is a diagram of estimating a gesture posture of a user according to an embodiment of this application;
FIG. 6 is another schematic flowchart of a control method according to an embodiment of this application;
FIG. 7 is another schematic flowchart of a control method according to an embodiment of this application; and
FIG. 8 is a block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B", similar to "A and/or B", describes an association relationship between associated objects and represents that three relationships may exist. For example, at least one of A and B may represent the following three cases: Only A exists, both A and B exist, and only B exists.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in description of embodiments, unless otherwise specified, "a plurality of" means two or more.

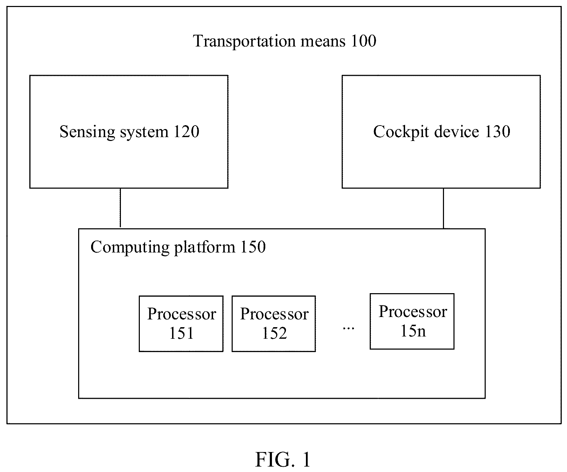

FIG. 1 is a functional block diagram of a transportation means 100 according to an embodiment of this application. The transportation means 100 may include a sensing system 120, a cockpit device 130, and a computing platform 150. The sensing system 120 may include one or more sensors that sense information about an environment around the transportation means 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter-wave radar, an ultrasonic radar, a microphone array, a temperature sensor, a light sensor, and a camera apparatus. The camera apparatus in embodiments of this application includes but is not limited to a red-green-blue (red-green-blue, RGB) camera, a time-of-flight (time-of-flight, TOF) camera, or an infrared (infrared, IR) camera.

Some or all functions of the transportation means 100 may be controlled by the computing platform 150. The computing platform 150 may include one or more processors, such as processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may further be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory and execute the instructions, to implement a corresponding function.

The cockpit device 130 may include at least one of a seat, a fragrance, a sound-generation apparatus, a light apparatus, an air conditioner, and a display apparatus.

For example, the display apparatus is mainly classified into two types: a first type is a vehicle display, and a second type is a projection display, for example, a head-up display (head-up display, HUD) apparatus. The vehicle display is a physical display, and is an important part of an in-vehicle infotainment system. A plurality of displays may be disposed in a cockpit, for example, a digital dashboard display, a central display screen, a display in front of a passenger in a front passenger seat (also referred to as a front-row passenger), a display in front of a rear-seat passenger on the left, and a display in front of a rear-seat passenger on the right. Even a window may be used as a display for display. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system. It should be understood that there may be another type of HUD system with evolution of technologies. This is not limited in this application.

The foregoing display apparatus is described by using the vehicle display and the projection display as an example. Embodiments of this application are not limited thereto. For example, the display apparatus may alternatively be a light display or a projection screen.

For example, the light apparatus may include an atmosphere light, a reading light, and the like.

In this embodiment of this application, the computing platform 150 may receive data sent by the sensing system 120, and adjust a state of the cockpit device 130 based on the data.

It should be understood that, in FIG. 1, that the computing platform 150 is connected to the sensing system 120 and the cockpit device 130 through a connection line may indicate that the computing platform 150, the sensing system 120, and the cockpit device 130 are connected in a wired manner; or may alternatively indicate that the computing platform 150, the sensing system 120, and the cockpit device 130 are connected in a wireless manner.

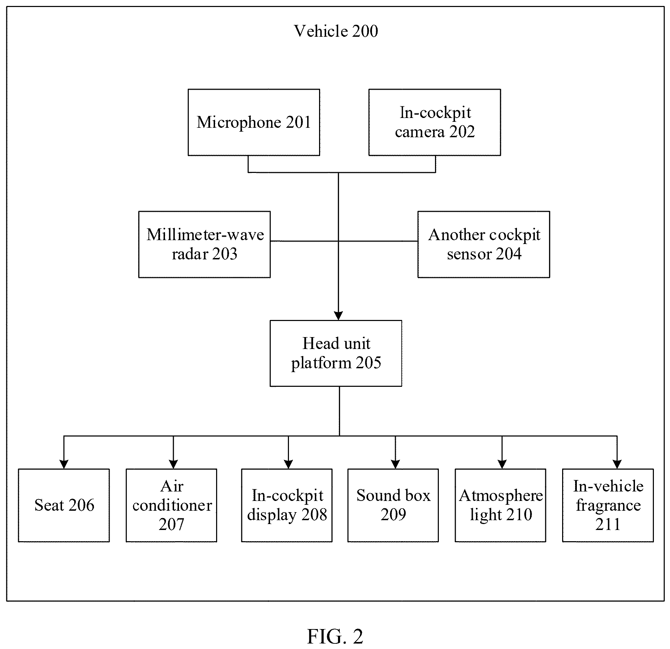

For example, the transportation means is a vehicle. FIG. 2 is a functional block diagram of a vehicle 200 according to an embodiment of this application. The vehicle 200 may include a microphone 201, an in-cockpit camera 202, a millimeter-wave radar 203, an another cockpit sensor 204, a head unit platform 205, a seat 206, an air conditioner 207, an in-cockpit display 208, a sound box 209, an atmosphere light 210, an in-vehicle fragrance 211, and the like. The microphone 201, the in-cockpit camera 202, the millimeter-wave radar 203, and the another cockpit sensor 204 may be located in the sensing system 120. The head unit platform 205 may be located in the computing platform 150. The seat 206, the air conditioner 207, the in-cockpit display 208, the sound box 209, the atmosphere light 210, and the in-vehicle fragrance 211 may be located in the cockpit device 130.

The another cockpit sensor 204 may include a temperature sensor, a light sensor, and the like.

The head unit platform 205 may receive data collected by one or more of the microphone 201, the in-cockpit camera 202, the millimeter-wave radar 203, and the another cockpit sensor 204. The head unit platform 205 may adjust a state of one or more devices in the seat 206, the air conditioner 207, the in-cockpit display 208, the sound box 209, the atmosphere light 210, and the in-vehicle fragrance 211 based on the data.

For example, when a nap mode is enabled, the head unit platform 205 may control a temperature of the air conditioner 207 to be 20°C and luminance of the in-cockpit display 208 to be 200 nits. The head unit platform 205 may further control the in-cockpit camera 202 to be turned on and collect an image in the cockpit. When determining, based on the image, that a user in the cockpit enters a sleep state, the head unit platform 205 may increase the temperature of the air conditioner 207 from 20°C to 26°C, and decrease display luminance of the in-cockpit display 208 from 200 nits to 100 nits.

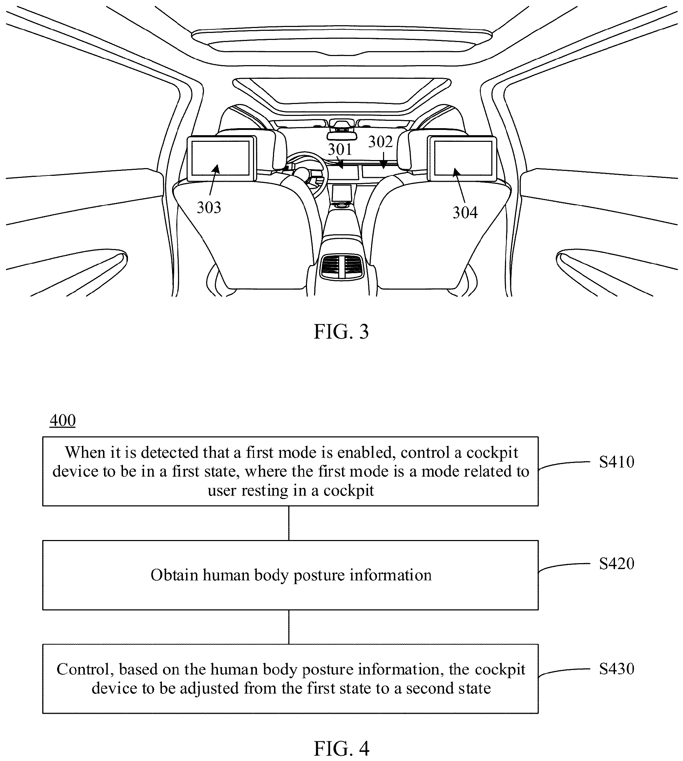

FIG. 3 is a diagram of an example of display distribution in a vehicle cockpit according to an embodiment of this application. As shown in FIG. 3, a cockpit of a vehicle may include a display 301 (or may be referred to as a central display screen), a display 302 (or may be referred to as a front passenger entertainment screen), a display 303 (or may be referred to as a second-row entertainment screen in a left area), a display 304 (or may be referred to as a second-row entertainment screen in a right area), and an instrument panel.

It should be understood that a graphical user interface (graphical user interface, GUI) in the following embodiments is described by using a five-seat vehicle shown in FIG. 2 as an example. Embodiments of this application are not limited thereto. For example, a cockpit of a seven-seat sport utility vehicle (sport utility vehicle, SUV) may include a central display screen, a front passenger entertainment screen, a second-row entertainment screen in a left area, a second-row entertainment screen in a right area, a third-row entertainment screen in a left area, and a third-row entertainment screen in a right area. For another example, a cockpit of a bus may include a front-row entertainment screen and a rear-row entertainment screen; or may include a display in a driving area and an entertainment screen in a passenger area. In an implementation, the entertainment screen in the passenger area may alternatively be disposed on a top of the cockpit.

As described above, after the current vehicle enters the nap mode, the vehicle adjusts the device to a configured state based on a manual pre-configuration of a user. When the user needs to modify a state of the device, the user needs to perform cumbersome manual adjustment. This affects driving experience of the user.

Embodiments of this application provide a control method and apparatus, and a transportation means, so that a state of a cockpit device in a first mode can be automatically adjusted based on human body posture information. This helps improve driving experience of a user, and also helps improve intelligence of the transportation means.

FIG. 4 is a schematic flowchart of a control method 400 according to an embodiment of this application. The method 400 may be performed by a transportation means (for example, a vehicle), or the method 400 may be performed by the foregoing computing platform (for example, a head unit platform), or the method 400 may be performed by a system including a computing platform and a cockpit device, or the method 400 may be performed by a system-on-a-chip (system-on-a-chip, SoC) on the computing platform, or the method 400 may be performed by a processor on the computing platform. The method 400 may be applied to a cockpit of the transportation means. The cockpit includes a cockpit device, the cockpit device includes at least one of a seat, a fragrance, a sound-generation apparatus, a light apparatus, an air conditioner, and a display apparatus, and the method 400 includes the following steps.

S410: When it is detected that a first mode is enabled, control the cockpit device to be in a first state, where the first mode is a mode related to user resting in the cockpit.

For example, the first mode includes but is not limited to a nap mode, a sleep mode, a rest mode, or a camping mode.

In an embodiment, the detecting that a first mode is enabled includes: enabling the first mode when an input of a user for indicating to enable the first mode is detected.

In an embodiment, the enabling the first mode when an input of a user for indicating to enable the first mode is detected includes: when the first mode is disabled, detecting a first operation of the user, and displaying a display interface of the first mode, where the display interface includes a control for enabling the first mode; and enabling the first mode when an input of the user for the control is detected.

For example, the first operation is an operation of the user for sliding down on the display apparatus. The display interface may be a drop-down menu display interface, and the drop-down menu display interface includes the control for enabling the first mode.

In an embodiment, the enabling the first mode when an input of a user for indicating to enable the first mode is detected includes: obtaining a voice instruction of the user when the first mode is disabled, where the voice instruction instructs to enable the first mode; and enabling the first mode based on the voice instruction.

For example, the user is located in a driver area in the vehicle. When it is detected that the user sends a voice instruction "enable a nap mode", an area in which the user who sends the voice instruction is located may be determined based on the voice instruction collected by a microphone array in the cockpit. For example, it may be determined, based on the voice instruction collected by the microphone array, that the user is located in the driver area. Therefore, a cockpit device in the driver area may be controlled to be in the first state.

In an embodiment, the detecting that a first mode is enabled includes: automatically enabling the first mode when a rest intention or a sleep intention of the user is detected.

In an embodiment, the automatically enabling the first mode when a rest intention or a sleep intention of the user is detected includes: automatically enabling the first mode when a yawning expression or a dozing expression of the user is detected.

In an embodiment, the automatically enabling the first mode when a yawning expression of the user is detected, includes: automatically enabling the first mode when it is detected, within first preset duration, that a quantity of times that the user yawns is greater than or equal to a preset quantity of times.

For example, the first preset duration is 5 minutes, and the preset quantity of times is 5.

In an embodiment, the automatically enabling the first mode when a dozing expression of the user is detected includes: automatically enabling the first mode when it is detected that duration of the dozing expression of the user is greater than or equal to second preset duration.

For example, the second preset duration is 3 minutes.

In this embodiment of this application, the first mode may be automatically enabled when the yawning expression or the dozing expression of the user is detected. In this way, the user does not need to manually enable the first mode. This helps improve experience of the user and also helps improve intelligence of the transportation means.

In an embodiment, the automatically enabling the first mode when a rest intention or a sleep intention of the user is detected includes: when a rest intention or a sleep intention of a user in a non-driver area is detected, controlling a cockpit device in the non-driver area to be in the first state.

In an embodiment, the automatically enabling the first mode when a rest intention or a sleep intention of the user is detected includes: when a rest intention or a sleep intention of a user in the driver area is detected and the transportation means is currently in a parked state, controlling the cockpit device in the driver area to be in the first state.

In an embodiment, a mapping relationship between a user and a state of the cockpit device is stored in the transportation means, and the controlling the cockpit device to be in the first state includes: determining that a first user triggers enabling of the first mode; and controlling, based on the first user and the mapping relationship, the cockpit device to be in the first state.

For example, Table 1 shows the mapping relationship between a user and a state of the cockpit device.

**Table 1**

| User | State of the cockpit device | | | | | |
|---|---|---|---|---|---|---|
| | Luminance of a central display screen | Volume of a speaker | Color of a light strip | Temperature of an air conditioner | Angle of a seat | ... |
| User A | 200 nits | 60 dB | Blue | 23°C | 160° | ... |
| User B | 150 nits | 50 dB | Pink | 26°C | 120° | ... |
| ... | ... | ... | ... | ... | ... | ... |

Table 1 is merely an example, and embodiments of this application are not limited thereto. For example, the state of the cockpit device may further include an air velocity and an air exhaust direction of the air conditioner, and a type of fragrance (for example, refreshing, odor removal, soothing and relaxing).

The angle of the seat may be an angle formed between a cushion of the seat and a back of the seat.

In an embodiment, before it is detected that the first mode is enabled, the method 400 further includes: obtaining a setting instruction of the user, where the setting instruction indicates that the state of the cockpit device is the first state when the first mode is enabled.

In an embodiment, before it is detected that the first mode is enabled, the method 400 further includes: recording a state of the cockpit device in a previous running process of the first mode, where the state of the cockpit device is the first state.

In an embodiment, the previous running process of the first mode includes a first moment, and the first moment is a moment at which the first mode is exited. The recording a state of the cockpit device when the first mode is entered last time includes: recording the state of the cockpit device at the first moment, where the state of the cockpit device is the first state.

S420: Obtain human body posture information.

In an embodiment, the human body posture information includes a gesture posture and a torso posture of the user.

For example, obtaining the gesture posture of the user is used as an example. FIG. 4 is a diagram of estimating the gesture posture of the user according to an embodiment of this application. As shown in FIG. 4, when it is detected that a user is in a driver area in a vehicle cockpit, image data that is of the driver area and that is collected by using an RGB camera may be input into a neural network (neural network, NN), so that a 2-dimension (2-dimension, 2D) result of a human hand and a human hand model may be output. A 2.5-dimension (2.5-dimension, 2.5D) result of key points of the human hand can be determined based on the human hand model. Based on the 2.5D result of the key points of the human hand and the 2D result of the human hand, 3D key point locations of the entire human hand may be obtained by using a perspective-n-point (perspective-n-point, PNP) algorithm. The gesture posture of the user in the driver area may be obtained by inputting the 3D key point locations into a gesture posture estimation module.

Similarly, the torso posture of the user may be obtained with reference to the process shown in FIG. 4. For example, the image data that is of the driver area and that is collected by using the RGB camera may be input into the NN, so that a 2D result of a torso and a torso model may be output. A 2.5D result of key points of the torso may be determined based on the torso model. Based on the 2.5D result of the key points of the torso and the 2D result of the torso, 3D key point locations of the torso may be obtained by using the PNP algorithm. The torso posture of the user in the driver area may be obtained by inputting the 3D key point locations of the torso into a torso posture estimation module.

It should be understood that the foregoing process of estimating the gesture posture shown in FIG. 4 is merely an example, and embodiments of this application are not limited thereto. The gesture posture and the torso posture may alternatively be determined in another manner. For example, the gesture posture may alternatively be estimated by using a convolutional pose machine (convolutional pose machine, CPM) algorithm.

S430: Control, based on the human body posture information, the cockpit device to be adjusted from the first state to a second state.

Optionally, the second state adapts to the human body posture information.

That the second state adapts to the human body posture information may also be understood as that a comfort degree of the user in the cockpit with the cockpit device in the second state is greater than a comfort degree of the user in the cockpit with the cockpit device in the first state.

Optionally, the method 400 further includes: obtaining a sleep comfort degree, where the sleep comfort degree indicates a comfort degree or a sleep depth of the user in a sleep state; and the controlling, based on the human body posture information, the cockpit device to be adjusted from the first state to a second state includes: controlling, based on the human body posture information and the sleep comfort degree, the cockpit device to be adjusted from the first state to the second state.

Optionally, the sleep comfort degree may indicate a sleep depth of the user in the sleep state. For example, the sleep depth may include a light sleep state and a deep sleep state. In this way, the state of the cockpit device in the first mode may be automatically adjust based on the human body posture information and the sleep comfort degree, and the user does not need to perform manual adjustment. This helps improve driving experience of the user, and also helps improve intelligence of the transportation means. In addition, the state of the cockpit device in the first mode is adjusted with reference to the sleep comfort degree. This helps improve sleep quality of the user in the sleep state.

Optionally, the obtaining a sleep comfort degree includes: when the human body posture information indicates that the user is in the sleep state, obtaining the sleep comfort degree.

For example, when the human body posture information indicates that eyes of the user change from an eye-open state to an eye-closed state, it may be determined that the user is in the sleep state.

Optionally, when ambient luminance in the cockpit is greater than or equal to preset ambient luminance, an eye status of the user may be determined based on data collected by an RGB sensor and/or an IR sensor in the cockpit; or when ambient luminance in the cockpit is less than preset ambient luminance, an eye status of the user may be determined based on data collected by an IR sensor and/or a millimeter-wave radar in the cockpit.

For example, the preset ambient luminance is 100 lux (lux).

For example, within preset duration starting from time when the human body posture information indicates that the eyes of the user change from the eye-open state to the eye-closed state, if it is detected that a change frequency of the torso posture of the user is less than or equal to a first preset frequency, it may be determined that the user is in the sleep state.

Optionally, the obtaining a sleep comfort degree includes: determining the sleep comfort degree based on first data collected by a sensor in the cockpit; or receiving second data sent by a wearable device, and determining the sleep comfort degree based on the second data.

For example, the sensor in the cockpit may include a millimeter-wave radar. A breathing frequency or a heartbeat frequency of the user may be determined based on the data collected by the millimeter-wave radar. Therefore, the sleep comfort degree of the user may be determined based on the breathing frequency or the heartbeat frequency of the user.

For example, when it is determined, based on the data collected by the millimeter-wave radar, that the heartbeat frequency of the user is within [70 times/minute, 100 times/minute], it may be determined that the user is in the light sleep state; or when it is determined, based on the data collected by the millimeter-wave radar, that the heartbeat frequency of the user is within [50 times/minute, 70 times/minute), it may be determined that the user is in the deep sleep state.

For example, when it is determined, based on the data collected by the millimeter-wave radar, that the breathing frequency of the user is within [16 times/minute, 20 times/minute], it may be determined that the user is in the light sleep state; or when it is determined, based on the data collected by the millimeter-wave radar, that the heartbeat frequency of the user is within (12 times/minute, 16 times/minute), it may be determined that the user is in the deep sleep state.

Optionally, the sleep comfort degree may be further determined with reference to the first data and the second data. For example, it is determined, based on the first data collected by the millimeter-wave radar in the cockpit, that the heartbeat frequency of the user is 65 times/minute, and it is determined, based on the second data sent by the wearable device, that the heartbeat frequency of the user is 71 times/minute. In this case, it may be determined, based on an average value (for example, 68 times/minute) of the heartbeat frequency determined by the first data and the heartbeat frequency determined by the second data, that the user is in the deep sleep state.

Optionally, the sleep comfort degree indicates a comfort degree of the user in the sleep state. For example, the comfort degree of the user in the sleep state includes that the user is in a comfort state or a non-comfort state in the sleep state.

For example, the sensor in the cockpit may include a camera, for example, a camera of a driver monitor system (driver monitor system, DMS) or a camera of a cabin monitor system (cabin monitor system, CMS). For example, after the user enters the sleep state, if the change frequency of the torso posture of the user is greater than or equal to a second preset frequency and less than the first preset frequency, it may be determined that the user is in the non-comfort state in the sleep state; or if the change frequency of the torso posture of the user is less than the second preset frequency, it may be determined that the user is in the comfort state in the sleep state, where the first preset frequency is greater than the second preset frequency.

For example, the transportation means may receive data sent by a smartwatch or a smart band, and determine the sleep comfort degree of the user based on the data. For example, when the human body posture information indicates that the user is in the sleep state, the transportation means may initiate a connection request to the smartwatch, where the connection request is used to request to establish a connection to the smartwatch. The smartwatch may establish a connection to the transportation means based on the connection request. For example, the transportation means and the smartwatch may establish the connection by using a short-range communication technology. The short-range communication technology includes but is not limited to a Bluetooth (Bluetooth) or Wi-Fi connection technology. For another example, the transportation means and the smartwatch may further establish the connection through a cloud server. After the connection is established between the transportation means and the smartwatch, the smartwatch may periodically send data to the transportation means.

For another example, when it is detected that the first mode is enabled, the transportation means may send a broadcast message, where the broadcast message is used to request to establish a connection to the wearable device of the user, and the broadcast message may include identification information of the user. After receiving the broadcast message, the smartwatch may establish the connection to the transportation means based on the identification information of the user.

For example, the receiving data sent by a smartwatch or a smart band includes: receiving one or more of a heartbeat frequency, a breathing frequency, a blood circulation speed, and blood pressure information that are of the user and that are sent by the smartwatch or the smart band. Therefore, the sleep comfort degree of the user is determined based on one or more of the heartbeat frequency, the breathing frequency, the blood circulation speed, and the blood pressure information.

For example, the receiving data sent by a smartwatch or a smart band includes: receiving information that is sent by the smartwatch or the smart band and that indicates the sleep comfort degree of the user.

In embodiments of this application, the sleep comfort degree of the user may be determined based on the data collected by the sensor in the cockpit, or the sleep comfort degree of the user may be determined based on the data sent by the wearable device. In this way, the state of the cockpit device in the first mode is adjusted with reference to the sleep comfort degree. This helps improve sleep quality of the user in the sleep state.

Optionally, the cockpit device includes the air conditioner and a temperature of the air conditioner is a first temperature when the cockpit device is in the first state, and the controlling, based on the human body posture information and the sleep comfort degree, the cockpit device to be adjusted from the first state to the second state includes: when the human body posture information indicates that the user is in the sleep state, controlling, based on the sleep comfort degree, the temperature of the air conditioner to be adjusted from the first temperature to a second temperature. In this way, when the user is in the sleep state, the temperature of the air conditioner may be adjusted based on the sleep comfort degree of the user, to help improve sleep quality of the user in the sleep state. For example, after the user enters the deep sleep state, a body temperature of the user also changes accordingly. The temperature of the air conditioner is adjusted, so that the user can be prevented from being woken up due to cold or heat in the deep sleep state, which affects sleep quality of the user.

Optionally, the temperature of the air conditioner is controlled to be adjusted from the first temperature to the second temperature based on the sleep comfort degree and duration of the sleep state.

For example, the first mode is enabled at a moment T₁, and the first mode ends at a moment T₂. If it is detected that the user enters the sleep state at a moment T₃ between the moment T₁ and the moment T₂, in this case, a sleep state of the user in a time period from the moment T₃ to the moment T₂ may be predicted. For example, it is predicted that the user is in the light sleep state in a time period [T₃, T₄] and is in the deep sleep state in a time period [T₄, T₂]. For example, when the air conditioner is in a cooling state and is in the first state, the temperature of the air conditioner is 20°C. The temperature of the air conditioner may be controlled to gradually increase from 20°C to a comfortable sleep somatosensory temperature (for example, 26°C) of a human body within the time period [T₃, T₄]. For example, if duration of the time period [T₃, T₄] is 20 minutes, the temperature of the air conditioner may be controlled to increase by 0.3°C per minute within the time period [T₃, T₄]. The temperature of the air conditioner is kept at 26°C within the time period [T₄, T₂]. This can ensure that when the user enters the deep sleep state, the temperature of the air conditioner is at a temperature at which the body feels comfortable.

The foregoing is described by using an example in which the comfortable sleep somatosensory temperature of the human body is 26°C. Embodiments of this application are not limited thereto. For example, the comfortable sleep somatosensory temperature of the human body may alternatively be 23°C.

The foregoing is described by using an example in which the temperature of the air conditioner is controlled to increase by 0.3°C per minute within the time period [T₃, T₄]. The temperature of the air conditioner may be adjusted in a linear manner, or may be adjusted in a nonlinear manner. For example, the temperature of the air conditioner may be further adjusted based on a thermal comfort curve of the human body.

For example, if it is determined, at a moment T₅ before the moment T₄, that the user enters the deep sleep state from the light sleep state, a temperature change frequency of the air conditioner may be increased within preset duration after the moment T₅. For example, if duration of a time period [T₃, T₅] is 10 minutes, the temperature of the air conditioner is increased to 23°C at the moment T₅. After the moment T₅, the temperature of the air conditioner is increased by 0.6°C per minute until the temperature is adjusted to 26°C. In this way, when it is determined that the user enters the deep sleep state in advance, a temperature change speed of the air conditioner may be increased for the temperature of the air conditioner to quickly change to a temperature suitable for deep sleep of the user. This helps improve sleep quality of the user.

For example, if it is not detected at the moment T₄ that the user enters the deep sleep state from the light sleep state, the temperature of the air conditioner may be kept at 26°C within the time period [T₄, T₂].

For example, after the user enters the deep sleep state from the light sleep state, the transportation means may further adjust the temperature of the air conditioner. For example, because the temperature of the air conditioner does not completely coincide with a thermal comfort temperature of the human body, the transportation means may adjust the temperature of the air conditioner by identifying thickness of clothes of the user, to ensure that a somatosensory temperature of the user conforms to thermal comfort of the human body.

In an embodiment, when the sleep state of the user in the time period from the moment T₃ to the moment T₂ is predicted, reference may be made to historical sleep data of the user. For example, the historical sleep data includes a ratio of duration of light sleep to duration of deep sleep after the user enables the first mode and enters the sleep state in a past time period (for example, one month).

In an embodiment, a proportion of the light sleep state (for example, 60% of entire sleep duration) and a proportion of the deep sleep state (for example, 40% of the entire sleep duration) may be preset in advance. For example, if duration of a time period [T₃, T₂] is 30 minutes, it may be predicted that duration of the user in the light sleep state is 18 minutes and duration of the user in the deep sleep state is 12 minutes.

The foregoing uses an example in which the sleep state of the user includes the light sleep state and the deep sleep state for description. Embodiments of this application are not limited thereto. For example, after entering the sleep state, the user may experience the light sleep state, the deep sleep state, and the light sleep state in sequence. For example, it is predicted that the user is in the light sleep state in the time period [T₃, T₄], switches from the light sleep state to the deep sleep state in a time period (T₄, T₆], and switches from the deep sleep state to the light sleep state in a time period (T₆, T₂]. The temperature of the air conditioner is gradually restored to 20°C within the time period (T₆, T₂].

Optionally, an air velocity of the air conditioner is a first air velocity in the first state, and the controlling, based on the human body posture information and the sleep comfort degree, the cockpit device to be adjusted from the first state to the second state includes: when the human body posture information indicates that the user is in the sleep state, controlling, based on the sleep comfort degree, the air velocity of the air conditioner to be adjusted from the first air velocity to a second air velocity.

For example, when the air conditioner is in a cooling state and is in the first state, the air velocity of the air conditioner is 2 meters per second (m/s). The air velocity of the air conditioner may be controlled to gradually decrease from 2 m/s to 1 m/s within a time period [T₃, T₄]. For example, if the duration of the time period [T₃, T₄] is 10 minutes, the air velocity of the air conditioner may be controlled to decrease by 0.1 m/s per minute within the time period [T₃, T₄]. The temperature of the air conditioner is kept at 1 m/s within the time period [T₄, T₂]. In this way, it can be ensured that when the user enters the deep sleep state, the air velocity of the air conditioner is at an air velocity at which the body feels comfortable.

For example, if it is determined, at the moment T₅ before the moment T₄, that the user enters the deep sleep state from the light sleep state, the temperature change frequency of the air conditioner may be increased within preset duration after the moment T₅. For example, if duration of a time period [T₃, T₅] is 5 minutes, the air velocity of the air conditioner decreases to 1.5 m/s at the moment T₅. After the moment T₅, the air velocity of the air conditioner is decreased by 0.2 m/s per minute until the air velocity is adjusted to 1 m/s. In this way, when it is determined that the user enters the deep sleep state in advance, an air velocity change speed of the air conditioner may be increased, for the air velocity of the air conditioner to quickly change to an air velocity suitable for deep sleep of the user. This helps improve sleep quality of the user.

For example, if it is not detected at the moment T₄ that the user enters the deep sleep state from the light sleep state, the air velocity of the air conditioner may be kept at 1 m/s within the time period [T₄, T₂].

In embodiments of this application, when the user is in the sleep state, the air velocity of the air conditioner may be adjusted based on the sleep comfort degree of the user, to help improve sleep quality of the user in the sleep state. For example, when the first mode is just entered, the air velocity of the air conditioner is large. After the user enters the deep sleep state, a large air velocity affects a somatosensory comfort degree of the user and causes large noise. The air velocity of the air conditioner is adjusted and decreased, so that the somatosensory comfort degree can be improved, and impact caused by the noise on the user can be reduced, thereby improving sleep quality of the user.

Optionally, an air exhaust direction of the air conditioner is a first direction in the first state, and the controlling, based on the human body posture information and the sleep comfort degree, the cockpit device to be adjusted from the first state to the second state includes: when the human body posture information indicates that the user is in the sleep state, controlling, based on the sleep comfort degree, the air exhaust direction of the air conditioner to be adjusted from the first direction to a second direction.

For example, when the air conditioner is in the cooling state and is in the first state, the air exhaust direction of the air conditioner faces the user. The air exhaust direction of the air conditioner may be controlled to gradually deviate from the user within the time period [T₃, T₄]. In this way, when the user enters the deep sleep state, the user is prevented from catching a cold caused by directly facing the air conditioner, which helps improve user experience.

For example, when the first direction faces a core area of the user (for example, an area like the face, the neck, the heart, or middle of the torso) and the user enters the sleep state, the air exhaust direction of the air conditioner may be controlled to gradually deviate from the core area of the user; or when the first direction faces a non-core area of the user and the user enters the sleep state, the air exhaust direction of the air conditioner may not be adjusted.

Optionally, the cockpit device includes the sound-generation apparatus and a volume of the sound-generation apparatus is a first volume when the cockpit device is in the first state, and the controlling, based on the human body posture information and the sleep comfort degree, the cockpit device to be adjusted from the first state to the second state includes: when the human body posture information indicates that the user is in the sleep state, based on the sleep comfort degree, controlling the volume of the sound-generation apparatus to be adjusted from the first volume to a second volume, or turning off the sound-generation apparatus, where the second volume is less than the first volume.

For example, when the first mode is enabled, a volume of a speaker in the cockpit is 70 dB in the first state. When the human body posture information indicates that the user enters the sleep state, the volume of the speaker in the cockpit may be lowered to 60 dB. The volume of the speaker is gradually lowered from 60 dB to 30 dB within the time period [T₃, T₄]. For example, if the duration of the time period [T₃, T₄] is 10 minutes, the volume of the speaker may be lowered by 3 dB per minute within the time period [T₃, T₄]. The volume of the speaker is kept at 30 dB within the time period [T₄, T₂]. In this way, after the user enters the deep sleep state, impact of an excessively high volume of the speaker on sleep quality of the user can be avoided.

In an embodiment, when the first mode is enabled, the volume of the speaker in the cockpit is 70 dB in the first state. When the human body posture information indicates that the user enters the sleep state, the volume of the speaker in the cockpit may be lowered to 60 dB. When the user enters the deep sleep state, the speaker in the cockpit may be directly turned off, or the volume of the speaker in the cockpit is controlled to be 0 dB.

In embodiments of this application, when the user is in the sleep state and the sleep comfort degree of the user is low, the volume of the sound-generation apparatus may be lowered or the sound-generation apparatus may be turned off, to avoid disturbance to the user due to an excessively high volume. This helps improve sleep quality of the user, and improves driving experience of the user.

In an embodiment, the cockpit device includes the seat, and the controlling, based on the human body posture information, the cockpit device to be adjusted from the first state to the second state includes: controlling a state of the seat massage function based on the human body posture information.

For example, when it is detected that the first mode is enabled, the seat massage function may be controlled to be in an enabled state. When the human body posture information indicates that the user enters the sleep state, the head unit may automatically control the seat massage function to switch from the enabled state to a disabled state.

For example, when it is detected that the first mode is enabled, the seat massage function may be controlled to be in the disabled state. When the human body posture information indicates that the user does not enter the sleep state within preset duration, the head unit may automatically control the seat massage function to switch from the disabled state to the enabled state.

For example, when the human body posture information indicates that the user does not enter the sleep state within the preset duration, that the seat massage function may be controlled to switch from the disabled state to the enabled state includes: When the human body posture information indicates that the user does not enter the sleep state within the preset duration and a change frequency of a torso posture of the user within preset duration is greater than a first preset frequency, the seat massage function may be controlled to switch from the disabled state to the enabled state. For example, the preset duration is 40% of running duration of the first mode. For example, if the running duration of the first mode is 30 minutes, the preset duration may be 12 minutes.

In an embodiment, the method 400 further includes: controlling massage strength of the seat massage function based on the human body posture information.

For example, when the human body posture information indicates that the user does not enter the sleep state within the preset duration, the seat massage function may be controlled to switch from the disabled state to the enabled state, and the massage strength of the seat massage function is first strength. When the human body posture information indicates that the user enters the sleep state, the massage strength of the seat massage function may be controlled to decrease from the first strength to second strength. When it is detected that the user enters the deep sleep state, the massage strength of the seat massage function may be decreased from the second strength to third strength, or the seat massage function is disabled.

In embodiments of this application, the state of the seat massage function may be automatically adjusted based on the human body posture information. For example, the seat massage function is in the disabled state when the first mode is enabled. When the human body posture information indicates that the user cannot enter the sleep state for long time, the seat massage function may be automatically enabled, to help the user relax, so that the user can enter the sleep state as soon as possible. When the human body posture information indicates that the user enters the sleep state, the seat massage function may be disabled, or the massage strength of the seat massage function is decreased. This helps avoid disturbance caused by seat massage to the user after the user enters the sleep state, and helps improve sleep quality of the user.

In an embodiment, the method 400 further includes: prompting the user to enable the seat massage function. In this way, before the state of the seat massage function is controlled to be enabled, the user may be further prompted to enable the seat massage function, so that the user may not be disturbed when the seat massage function is automatically enabled, and driving experience of the user is improved.

For example, the seat massage function is in the disabled state when the first mode is enabled. When the human body posture information indicates that the user cannot enter the sleep state for long time, the user may be prompted to enable the seat massage function. For example, the user may be prompted, by using voice information "It is detected that you are uncomfortable. Do you want to enable the seat massage function", to enable the seat massage function. When an input (for example, the user issues a voice command "Enable the seat massage function") of the user for indicating to enable the seat massage function is detected, the seat massage function may be enabled.

In an embodiment, the prompting the user to enable the seat massage function includes: when there are a plurality of users in the cockpit, controlling a sound-generation apparatus at a headrest of a seat in which the user is located to prompt the user to enable the seat massage function.

For example, the transportation means is a vehicle, and users are in both a driver area and a front passenger area in a cockpit of the vehicle. When the user in the driver area selects to enable the first mode, a cockpit device in the driver area may be controlled to be in the first state, and the seat massage function is in the disabled state in the first state. When human body posture information of the user in the driver area indicates that the user in the driver area cannot enter the sleep state for long time, a speaker at a headrest of a seat in the driver area may be controlled to give an alert tone, to prompt the user in the driver area whether to enable the seat massage function. In this way, disturbance to the user in the front passenger area can be avoided.

In an embodiment, before the prompting the user to enable the seat massage function, the method 400 further includes: determining, within preset duration starting from time when the cockpit device is in the first state, that a change frequency of the torso posture of the user is greater than or equal to a preset frequency, and the prompting the user to enable the seat massage function includes: prompting the user to enable the seat massage function when the first mode ends. In this way, statistics may be collected on the change frequency of the torso posture of the user within the preset duration starting from the time when the cockpit device is in the first state. For example, if the change frequency of the torso posture of the user within the preset duration is excessively large, it may be considered that the user is in an uncomfortable state. When the first mode ends, the user may be actively prompted to enable the seat massage function, to help the user relax, and help alleviate uncomfortable feeling of the user.

In an embodiment, the human body posture information includes an eye status of the user, the cockpit device includes the display apparatus and luminance of the display apparatus is first luminance when the cockpit device is in the first state, and the controlling, based on the human body posture information, the cockpit device to be adjusted from the first state to a second state includes: when the eye status indicates that the user is in an eye-closed state, controlling the luminance of the display apparatus to be adjusted from the first luminance to second luminance, or turning off the display apparatus, where the second luminance is less than the first luminance. In this way, when the user is in the eye-closed state, the luminance of the display apparatus may be decreased or the display apparatus may be turned off. The luminance of the display apparatus is decreased, to help promote sleep of the user, and help improve driving experience of the user.

In an embodiment, the method 400 further includes: before it is detected that the first mode is enabled, controlling the luminance of the display apparatus to be third luminance, where the third luminance is higher than the first luminance; when it is detected that the first mode is enabled, controlling the luminance of the display apparatus to be adjusted from the third luminance to the first luminance; and when the human body posture information indicates that the user is in the sleep state, controlling the luminance of the display apparatus to be adjusted from the first luminance to the second luminance.

For example, when the eye status indicates that the user is in the eye-closed state, that the head unit actively controls the luminance of the display apparatus to be adjusted from the first luminance to the second luminance, or turns off the display apparatus includes: when eyes of the user change from an eye-open state to the eye-closed state, controlling the luminance of the display apparatus to be adjusted from the first luminance to the second luminance, or turning off the display apparatus.

In an embodiment, when the eye status indicates that the user is in the eye-closed state, the controlling the luminance of the display apparatus to be adjusted from the first luminance to second luminance includes: controlling, based on ambient luminance, the luminance of the display apparatus to be adjusted from the first luminance to the second luminance.

For example, when the eye status indicates that the user is in the eye-closed state, if the ambient luminance is less than 50 lux, the luminance of the display apparatus may be controlled to decrease from 200 nits to 0 nits; or if the ambient luminance is greater than or equal to 50 lux and less than 100 lux, the luminance of the display apparatus may be controlled to decrease from 200 nits to 150 nits; or if the ambient luminance is greater than or equal to 100 lux, the luminance of the display apparatus may be controlled to decrease from 200 nits to 180 nits.

In an embodiment, the human body posture information includes a first gesture posture of the user, and the controlling, based on the human body posture information, the cockpit device to be adjusted from the first state to a second state includes: controlling, based on the first gesture posture, the cockpit device to be adjusted from the first state to the second state. In this way, the gesture posture may include indication information, used to adjust the state of the cockpit device in the first mode. This helps improve driving experience of the user and also helps improve intelligence of the transportation means. For example, in the first mode, a seat angle of the user is adjusted to a lying-down state. In this case, if the user needs to lower the volume of the sound-generation apparatus, the user does not need to rise to operate the display apparatus to lower the volume, but may directly lower the volume by using a gesture posture in the lying-down state, so that a manner of lowering the volume is user-friendly.

In an embodiment, a mapping relationship between a gesture posture and status adjustment of the cockpit device is stored in the transportation means.

For example, Table 2 shows the mapping relationship between a gesture posture and status adjustment of the cockpit device.

**Table 2**

| | |
|---|---|
| Gesture posture | Status adjustment of the cockpit device |
| Hover gesture | Turn off an alarm |
| Wave from left to right, or from right to left | Delay an alarm (for example, ring again after a delay of 10 minutes) |
| Wave from bottom to top | Increase a temperature of an air conditioner |
| Wave from top to bottom | Decrease the temperature of the air conditioner |
| OK gesture | Enable a seat massage function |
| ... | ... |

The mapping relationship shown in Table 2 is merely an example. This is not specifically limited in embodiments of this application.

For example, when the first mode is enabled, the temperature of the air conditioner is 20°C in the first state. When it is detected that the user waves a hand from bottom to top, the temperature of the air conditioner may be controlled to increase from 20°C to 21°C. When it is detected that the user waves a hand from bottom to top again, the temperature of the air conditioner may be controlled to increase from 21°C to 22°C.

For example, when the first mode is enabled, the temperature of the air conditioner is 20°C in the first state. When it is detected that the user waves the hand from bottom to top, the temperature of the air conditioner may be controlled to increase based on a distance by which the hand moves from bottom to top. For example, when the distance by which the hand of the user moves from bottom to top is less than a first preset distance, the temperature of the air conditioner may be controlled to increase from 20°C to 21°C; or when the distance by which the hand of the user moves from bottom to top is greater than or equal to the first preset distance, the temperature of the air conditioner may be controlled to increase from 20°C to 22°C.

For example, when the first mode is enabled, the temperature of the air conditioner is 20°C in the first state. When it is detected that the user waves the hand from bottom to top, the temperature of the air conditioner may be controlled to increase based on a speed at which the hand moves from bottom to top. For example, when the speed at which the hand of the user moves from bottom to top is less than a first preset speed, the temperature of the air conditioner may be controlled to increase from 20°C to 21°C; or when the speed at which the hand of the user moves from bottom to top is greater than or equal to the first preset speed, the temperature of the air conditioner may be controlled to increase from 20°C to 22°C.

In an embodiment, the cockpit includes a first area, the user is located in the first area, and the controlling, based on the first gesture posture, the cockpit device to be adjusted from the first state to the second state includes: controlling, based on the first gesture posture, a device that is in the cockpit device and that is associated with the first area to be adjusted from the first state to the second state. When there are a plurality of users in the cockpit in the first mode, a state of the device that is in the cockpit device and that is associated with the first area may be adjusted based on a gesture posture of the user in the first area. In this way, fine control of different areas in the cockpit can be implemented. When the user in the first area expects to adjust the state of the device that is in the cockpit device and that is associated with the first area, a user in another area in the cockpit is not disturbed. This helps improve driving experience of a plurality of users in the cockpit, and also helps improve intelligence of the transportation means.

In an embodiment, duration of the first mode is first duration, and the method further includes: when the first duration ends, prompting, by using an alarm, the user to disable the first mode; and based on a second gesture posture of the user, controlling the alarm to be turned off, or controlling the alarm to perform delay prompt.

When the user is woken up by the alarm, emotion and awareness of the user are in an unclear state. In this case, if the user performs an operation on the display apparatus to turn off the alarm non-user-friendliness and inconvenience are caused to the user. In embodiments of this application, when the duration of the first mode ends, the alarm may be turned off by using the second gesture posture, or the alarm may be controlled, by using the second gesture posture, to perform delay prompt. This prevents the user from turning off the alarm or delaying prompt by using a tap operation on the display apparatus, facilitates the user in turning off the alarm or controlling the alarm to perform delay prompt in time, and also makes a manner of turning off the alarm or controlling the alarm to perform delay prompt user-friendly.

In an embodiment, the method 400 further includes: when the alarm is turned off, exiting the first mode.

The exiting the first mode may include: restoring the state of the cockpit device to a state before enabling of the first mode.

For example, before the first mode is enabled, an angle of a seat in the cockpit is 100°, the air conditioner is in an off state, and luminance of a display in the cockpit is 200 nits. Before the second gesture posture of the user is detected, the angle of the seat in the cockpit is 170°, the temperature of the air conditioner is 26°C, and the luminance of the display is 100 nits. When the alarm is turned off by using the second gesture posture, the angle of the seat in the cockpit may be controlled to be adjusted from 170° to 100°, the air conditioner is controlled to be turned off, and the luminance of the display is controlled to be adjusted from 100 nits to 200 nits.

In an embodiment, the controlling the alarm to be turned off includes: when a hover gesture of the user is detected, controlling the alarm to be turned off.

For example, the hover gesture is a gesture in which five fingers of the user stretch and a palm faces the display apparatus.

In an embodiment, the controlling the alarm to perform delay prompt includes: when a leftward-slide gesture or a rightward-slide gesture of the user is detected, controlling the alarm to perform delay prompt.

In an embodiment, the user sits on a first seat in the first area, and before it is detected that the first mode is enabled, it is determined, based on a user operation of setting an angle of the first seat in advance or based on a state of the first seat before previous exiting of the first mode, that the angle of the first seat is controlled to be a first angle when the first mode is enabled. The method further includes: when it is detected that the first mode is enabled, detecting whether a user is on a second seat; and when the user is on the second seat and the user on the second seat is affected when the angle of the first seat is adjusted to the first angle, controlling the angle of the first seat to be adjusted to a second angle, where the second seat is a seat located behind the first seat and adjacent to the first seat, and the second angle is less than the first angle. In this way, when the first mode is enabled, presence or absence of a user on the second seat on a rear side of the first seat may be detected. If there is a user on the second seat and the user on the second seat is affected when the angle of the first seat is adjusted to the first angle, the angle of the first seat may be controlled to be adjusted to the second angle. In this way, after the first mode is entered, inconvenience caused by the state of the first seat to the user on the second seat is avoided, driving experience of a plurality of users in the cockpit is improved, and the intelligent degree of the transportation means is also improved.

In embodiments of this application, the state of the cockpit device in the first mode may be automatically adjusted based on the human body posture information, and the user does not need to perform manual adjustment. This helps improve driving experience of the user, and also helps improve intelligence of the transportation means. In addition, accuracy of adjustment on the cockpit device can also be improved by adjusting the cockpit device based on the human body posture information, so that the cockpit device is always in a state at which the user feels comfortable.

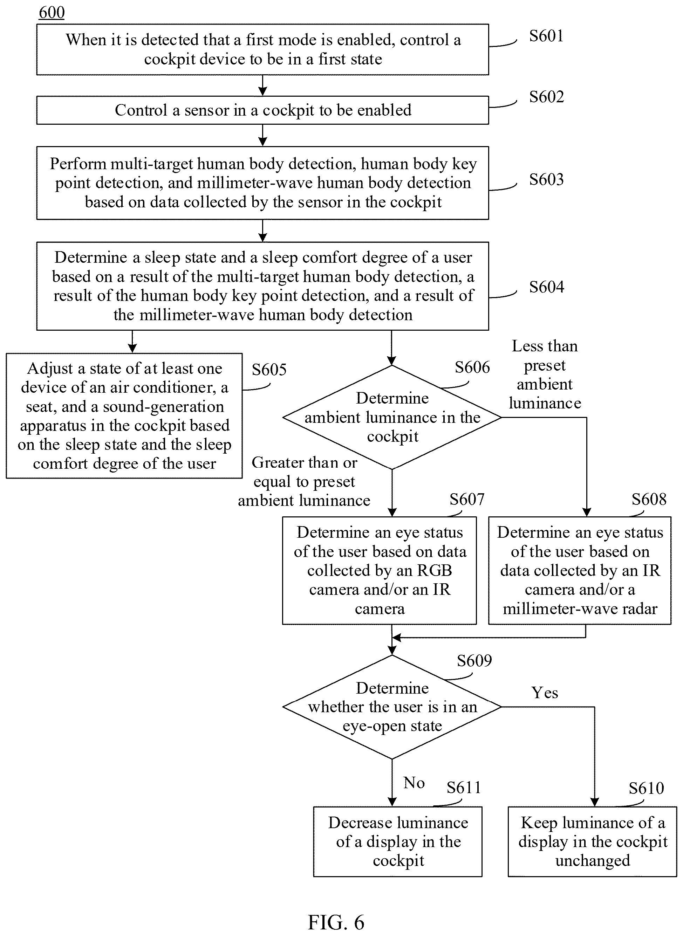

FIG. 6 is a schematic flowchart of a control method 600 according to an embodiment of this application. As shown in the FIG. 6, the method 600 may be performed by a transportation means (for example, a vehicle), or the method 600 may be performed by the computing platform (for example, a head unit platform), or the method 600 may be performed by a system including a computing platform and a cockpit device, or the method 600 may be performed by a SoC on the computing platform, or the method 600 may be performed by a processor on the computing platform. The method 600 includes the following steps.

S601: When it is detected that a first mode is enabled, control the cockpit device to be in a first state.

For an implementation process of S601, refer to S410. Details are not described herein again.

S602: Control a sensor in a cockpit to be enabled.

For example, the sensor in the cockpit may include a camera or a millimeter-wave radar.

For example, it may be determined, based on data collected by the camera in the cockpit, that a user in the cockpit is a user A, and the controlling the cockpit device to be in a first state includes: controlling, based on the mapping relationship between a user and a state of the cockpit device shown in Table 1, luminance of a central display screen to be 200 nits, a volume of a speaker to be 60 decibels, a color of a light strip to be blue, a temperature of an air conditioner to be 23°C, a seat massage function to be enabled, and a seat angle to be 160°.

S603: Perform multi-target human body detection, human body key point detection, and millimeter-wave human body detection based on data collected by the sensor in the cockpit.

For the foregoing processes of the multi-target human body detection and the human body key point detection, refer to the implementation process shown in FIG. 4. For example, a result of the multi-target human body detection may be the 2D result of the hand or the 2D result of the torso, and a result of the human body key point detection may be the 3D key points of the hand or the 3D key points of the torso.

The foregoing millimeter-wave human body detection may be understood as determining a sleep comfort degree of the user based on data collected by the millimeter-wave radar.

S604: Determine a sleep state and the sleep comfort degree of the user based on the result of the multi-target human body detection, the result of the human body key point detection, and a result of the millimeter-wave human body detection.

For example, a facial posture of the user may be determined based on the 2D result of the torso and the 3D key points of the torso. An eye status of the user is obtained by analyzing the face posture. When the eye status is an eye-open state, it may be determined that the user does not enter the sleep state; or when the eye status is an eye-closed state, it may be determined that the user enters the sleep state.

For example, when it is determined, based on the data collected by the millimeter-wave radar, that a heartbeat frequency of the user is within [70 times/minute, 100 times/minute], it may be determined that the user is in a light sleep state; or when it is determined, based on the data collected by the millimeter-wave radar, that the heartbeat frequency of the user is within [50 times/minute, 70 times/minute), it may be determined that the user is in a deep sleep state.

S605: Adjust a state of at least one device of an air conditioner, a seat, and a sound-generation apparatus in the cockpit based on the sleep state and the sleep comfort degree of the user.

For example, when it is determined that the user A enters the sleep state and the user A is in the light sleep state, the volume of the speaker may be controlled to decrease from 60 decibels to 40 decibels, the seat massage function may be controlled to switch from an enabled state to a disabled state, and a temperature of the air conditioner may be controlled to increase from 23°C to 24°C.

For example, when it is determined that the user A is in the deep sleep state, the volume of the speaker may be controlled to decrease from 40 decibels to 20 decibels, and the temperature of the air conditioner may be controlled to increase from 24°C to 26°C.

S606: Determine ambient luminance in the cockpit.

For example, when the ambient luminance in the cockpit is greater than or equal to preset ambient luminance, S607 may be performed; otherwise, S608 is performed.

For example, the preset ambient luminance is 100 lux.

S607: When the ambient luminance in the cockpit is greater than or equal to the preset ambient luminance, determine the eye status of the user based on data collected by an RGB camera and/or an IR camera.

For example, the eye status of the user may be determined by using the data collected by the RGB camera as main data and using the data collected by the IR camera as auxiliary data.

S608: When the ambient luminance in the cockpit is less than the preset ambient luminance, determine the eye status of the user based on the data collected by the IR camera and/or the millimeter-wave radar.

For example, the eye status of the user may be determined by using the data collected by the IR camera as main data and using the data collected by the millimeter-wave radar as auxiliary data.

S609: Determine whether the user is in the eye-open state.

For example, if the user is in the eye-open state, S610 is performed; otherwise, S611 is performed.

S610: When the user is in the eye-open state, keep luminance of a display in the cockpit unchanged.

For example, when the user A is in the eye-open state, the luminance of the display in the cockpit may be kept at 200 nits.

S611: When the user is in the eye-closed state, decrease the luminance of the display in the cockpit.

In an embodiment, when the user is in the eye-closed state, the decreasing the luminance of the display in the cockpit includes: when duration in which the user is in the eye-closed state is greater than or equal to preset duration, decreasing the luminance of the display. For example, the preset duration is 10 seconds (second, s).

For example, when the user A is in the eye-closed state, the luminance of the display may be controlled to decrease from 200 nits to 100 nits.

In an embodiment, the decreasing the luminance of the display in the cockpit includes: decreasing the luminance of the display in the cockpit based on the sleep comfort degree of the user.

For example, when the user A is in the light sleep state, the luminance of the display may be controlled to decrease from 200 nits to 100 nits.

For another example, when the user A enters the deep sleep state from the light sleep state, the luminance of the display may be controlled to decrease from 100 nits to 50 nits, or the display may be turned off.

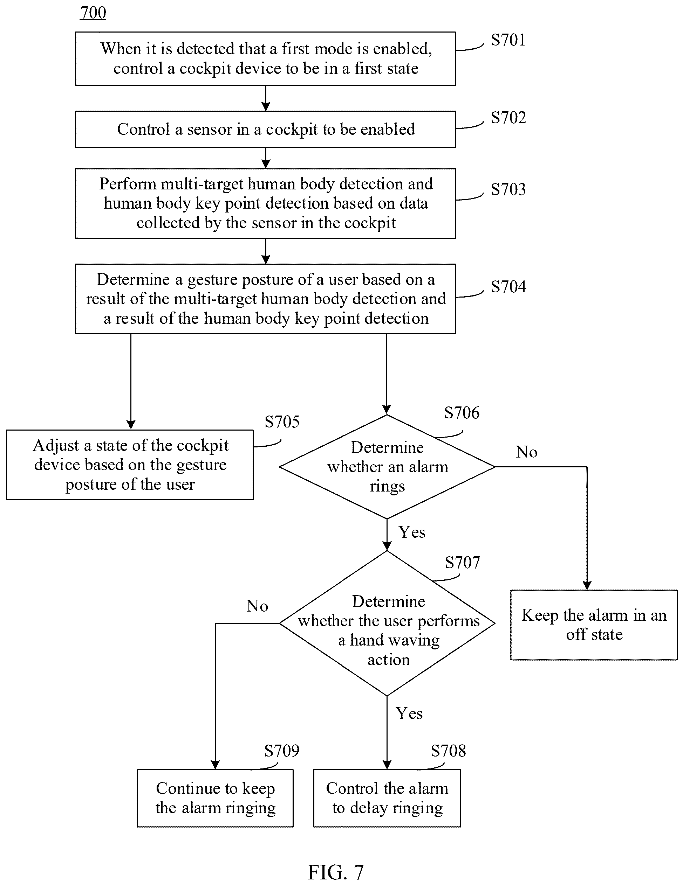

With reference to the control method shown in FIG. 6, the foregoing describes a process of adjusting the state of the cockpit device based on the sleep state and the sleep comfort degree of the user. With reference to a control method shown in FIG. 7, the following describes a process of adjusting a state of a cockpit device, delaying an alarm ring, or turning off an alarm based on a gesture posture of a user.

FIG. 7 is a schematic flowchart of a control method 700 according to an embodiment of this application. As shown in the FIG. 7, the method 700 may be performed by a transportation means (for example, a vehicle), or the method 700 may be performed by the computing platform (for example, the head unit platform), or the method 700 may be performed by a system including a computing platform and a cockpit device, or the method 700 may be performed by a SoC on the computing platform, or the method 700 may be performed by a processor on the computing platform. The method 700 includes the following steps.

S701: When it is detected that a first mode is enabled, control the cockpit device to be in a first state.

S702: Control a sensor in a cockpit to be enabled.

For the foregoing S701 and S702, refer to the foregoing descriptions of S601 and S602. Details are not described herein again.

S703: Perform multi-target human body detection and human body key point detection based on data collected by a sensor in the cockpit.

For the foregoing process of performing multi-target human body detection and human body key point detection, refer to the foregoing descriptions of S603. Details are not described herein again.

S704: Determine a gesture posture of a user based on a result of the multi-target human body detection and a result of the human body key point detection.

For the foregoing process of determining the gesture posture of the user, refer to the descriptions of FIG. 4. Details are not described herein again.

S705: Adjust a state of the cockpit device based on the gesture posture of the user.

For example, as shown in the foregoing Table 2, when it is detected that the user waves a hand from bottom to top, a temperature of an air conditioner may be increased.

For example, when it is detected that the user shows an OK gesture, a seat massage function may be enabled.

S706: Determine whether an alarm rings.

For example, when duration of the first mode reaches preset duration, the alarm may be controlled to ring; otherwise, the alarm is kept in an off state.

S707: When the alarm rings, determine whether the user performs a hand waving action.

S708: When the hand waving action of the user is detected, control the alarm to delay ringing.

For example, when it is detected that the user waves the hand from left to right or from right to left, the alarm may be controlled to delay ringing.

S709: When the hand waving action of the user is not detected, continue to keep the alarm ringing.

In an embodiment, when the alarm rings, it may be further determined whether the user shows a hover gesture. When the hover gesture of the user is detected, the alarm may be controlled to be turned off; otherwise, the alarm continues to ring.

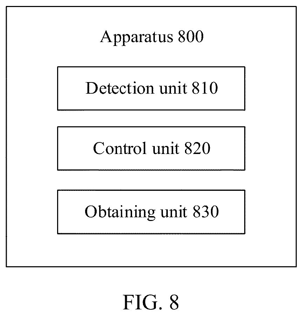

FIG. 8 is a block diagram of a control apparatus 800 according to an embodiment of this application. As shown in FIG. 8, the apparatus 800 includes: a detection unit 810, configured to detect that a first mode is enabled, where the first mode is a mode related to user resting in a cockpit of a transportation means, the cockpit includes a cockpit device, and the cockpit device includes at least one of a seat, a fragrance, a sound-generation apparatus, a light apparatus, an air conditioner, and a display apparatus; a control unit 820, configured to control the cockpit device to be in a first state; and an obtaining unit 830, configured to obtain human body posture information, where the control unit 820 is further configured to control, based on the human body posture information, the cockpit device to be adjusted from the first state to a second state.

Optionally, the obtaining unit 830 is further configured to obtain a sleep comfort degree, where the sleep comfort degree indicates a comfort degree or a sleep depth of a user in a sleep state; and the control unit 820 is further configured to control, based on the human body posture information and the sleep comfort degree, the cockpit device to be adjusted from the first state to the second state.

Optionally, the obtaining unit 830 is configured to: determine the sleep comfort degree based on first data collected by a sensor in the cockpit; or receive second data sent by a wearable device, and determine the sleep comfort degree based on the second data.

Optionally, the cockpit device includes the air conditioner and a temperature of the air conditioner is a first temperature when the cockpit device is in the first state, and the control unit 820 is configured to: when the human body posture information indicates that the user is in the sleep state, control, based on the sleep comfort degree, the temperature of the air conditioner to be adjusted from the first temperature to a second temperature.

Optionally, the cockpit device includes the sound-generation apparatus and a volume of the sound-generation apparatus is a first volume when the cockpit device is in the first state, and the control unit 820 is configured to: when the human body posture information indicates that the user is in the sleep state, based on the sleep comfort degree, control the volume of the sound-generation apparatus to be adjusted from the first volume to a second volume, or turn off the sound-generation apparatus, where the second volume is less than the first volume.

Optionally, the cockpit device includes the seat, and the control unit 820 is configured to: control a state of the seat massage function based on the human body posture information.

Optionally, the apparatus 800 further includes: a first prompt unit, configured to prompt the user to enable the seat massage function.

Optionally, the human body posture information includes an eye status of the user, the cockpit device includes the display apparatus and luminance of the display apparatus is first luminance when the cockpit device is in the first state, and the control unit 820 is configured to: when the eye status indicates that the user is in an eye-closed state, control the luminance of the display apparatus to be adjusted from the first luminance to second luminance, or turn off the display apparatus, where the second luminance is less than the first luminance.

Optionally, the human body posture information includes a first gesture posture of the user, and the control unit 820 is configured to control, based on the first gesture posture, the cockpit device to be adjusted from the first state to the second state.

Optionally, the cockpit includes a first area, the user is located in the first area, and the control unit 820 is configured to control, based on the first gesture posture, a device that is in the cockpit device and that is associated with the first area to be adjusted from the first state to the second state.

Optionally, duration of the first mode is first duration, and the apparatus 800 further includes: a second prompt unit, configured to: when the first duration ends, prompt, by using an alarm, the user to disable the first mode, where the control unit 820 is further configured to: based on a second gesture posture of the user, control the alarm to be turned off, or control the alarm to perform delay prompt.

Optionally, the second state adapts to the human body posture information.

Optionally, the first mode is a nap mode, a sleep mode, a rest mode, or a camping mode.

For example, the detection unit 810 may be the computing platform in FIG. 1, or a processing circuit, a processor, or a controller on the computing platform in FIG. 1. For example, the detection unit 810 is the processor 151 on the computing platform. The processor 151 may obtain data collected by a camera and a touch sensor in the cockpit. The processor 151 may determine, based on the data collected by the camera and the touch sensor in the cockpit, that a user in a driver area enables the first mode.

For another example, the control unit 820 may be the computing platform in FIG. 1, or a processing circuit, a processor, or a controller on the computing platform in FIG. 1. For example, the control unit 820 is the processor 152 on the computing platform. When the processor 151 determines that the user in the driver area enables the first mode, the processor 152 may control the cockpit device in the cockpit to be in the first state.

For another example, the obtaining unit 830 may be the computing platform in FIG. 1, or a processing circuit, a processor, or a controller on the computing platform in FIG. 1. For example, the obtaining unit 830 is the processor 153 on the computing platform. When the processor 152 controls the cockpit device to be in the first state, the processor 153 may determine human body posture information of the user in the driver area based on data collected by a sensor in the cockpit.

The processor 152 may further adjust the state of the cockpit device from the first state to the second state based on the human body posture information that is of the user in the driver area and that is determined by the processor 153.

The functions implemented by the detection unit 810, the functions implemented by the control unit 820, and the functions implemented by the obtaining unit 830 may be implemented by different processors, or some functions may be implemented by a same processor, or all functions may be implemented by a same processor. This is not limited in embodiments of this application.

It should be understood that division of the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of hardware circuit, or some of the units are implemented in the form of software invoked by the processor, and remaining units are implemented in the form of hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit, and the logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be seen that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of SoC. The SoC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides a control apparatus, where the apparatus includes a processing unit and a storage unit. The storage unit is configured to store instructions, and the processing unit executes the instructions stored in the storage unit, so that the apparatus is enabled to perform the control method performed in the foregoing embodiments.

Optionally, if the apparatus is located in a transportation means, the processing unit may be the processors 151 to 15n in FIG. 1.

An embodiment of this application further provides a control system, where the control system may include a computing platform and a cockpit device. The computing platform may include the foregoing control apparatus 800.

For example, the cockpit device may include a display apparatus, and the display apparatus may include a vehicle display, for example, one or more of the display 301, the display 302, the display 303, or the display 304 in FIG. 3.

Optionally, the control system further includes one or more sensors.

An embodiment of this application further provides a transportation means, where the transportation means may include the foregoing control apparatus 800 or the foregoing control system.

Optionally, the transportation means may be a vehicle.

An embodiment of this application further provides a computer program product, where the computer program product includes computer program code. When the computer program code is run on a computer, the computer is enabled to perform the control method in the foregoing embodiments.

An embodiment of this application further provides a computer-readable medium, where the computer-readable medium stores program code. When the computer program code is run on a computer, the computer is enabled to perform the control method in the foregoing embodiments.

An embodiment of this application further provides a chip, where the chip includes a circuit, and the circuit is configured to perform the control method in the foregoing embodiments.

In an implementation process, steps in the foregoing methods can be implemented by using a hardware integrated logic circuit in a processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should be further understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, applied to a cockpit of a transportation means, wherein the cockpit comprises a cockpit device, the cockpit device comprises at least one of a seat, a fragrance, a sound-generation apparatus, a light apparatus, an air conditioner, and a display apparatus, and the method comprises:
when it is detected that a first mode is enabled, controlling the cockpit device to be in a first state, wherein the first mode is a mode related to user resting in the cockpit;
obtaining human body posture information; and
controlling, based on the human body posture information, the cockpit device to be adjusted from the first state to a second state.

2. The method according to claim 1, wherein the method further comprises:
obtaining a sleep comfort degree, wherein the sleep comfort degree indicates a comfort degree or a sleep depth of a user in a sleep state; and
the controlling, based on the human body posture information, the cockpit device to be adjusted from the first state to a second state comprises:
controlling, based on the human body posture information and the sleep comfort degree, the cockpit device to be adjusted from the first state to the second state.

3. The method according to claim 2, wherein the obtaining a sleep comfort degree comprises:
determining the sleep comfort degree based on first data collected by a sensor in the cockpit;
or
receiving second data sent by a wearable device, and determining the sleep comfort degree based on the second data.

4. The method according to claim 2 or 3, wherein the cockpit device comprises the air conditioner and a temperature of the air conditioner is a first temperature when the cockpit device is in the first state, and the controlling, based on the human body posture information and the sleep comfort degree, the cockpit device to be adjusted from the first state to the second state comprises:
when the human body posture information indicates that the user is in the sleep state, controlling, based on the sleep comfort degree, the temperature of the air conditioner to be adjusted from the first temperature to a second temperature.

5. The method according to claim 2 or 3, wherein the cockpit device comprises the sound-generation apparatus and a volume of the air sound-generation apparatus is a first volume when the cockpit device is in the first state, and the controlling, based on the human body posture information and the sleep comfort degree, the cockpit device to be adjusted from the first state to the second state comprises:
when the human body posture information indicates that the user is in the sleep state, based on the sleep comfort degree, controlling the volume of the sound-generation apparatus to be adjusted from the first volume to a second volume, or turning off the sound-generation apparatus, wherein the second volume is less than the first volume.

6. The method according to any one of claims 1 to 5, wherein the cockpit device comprises the seat, and the controlling, based on the human body posture information, the cockpit device to be adjusted from the first state to the second state comprises:
controlling a state of the seat massage function based on the human body posture information.

7. The method according to claim 6, wherein the method further comprises:
prompting the user to enable the seat massage function.

8. The method according to any one of claims 1 to 7, wherein the human body posture information comprises an eye status of the user, the cockpit device comprises the display apparatus and luminance of the display apparatus is first luminance when the cockpit device is in the first state, and the controlling, based on the human body posture information, the cockpit device to be adjusted from the first state to a second state comprises:
when the eye status indicates that the user is in an eye-closed state, controlling the luminance of the display apparatus to be adjusted from the first luminance to second luminance, or turning off the display apparatus, wherein the second luminance is less than the first luminance.

9. The method according to any one of claims 1 to 8, wherein the human body posture information comprises a first gesture posture of the user, and the controlling, based on the human body posture information, the cockpit device to be adjusted from the first state to a second state comprises:
controlling, based on the first gesture posture, the cockpit device to be adjusted from the first state to the second state.

10. The method according to claim 9, wherein the cockpit comprises a first area, the user is located in the first area, and the controlling, based on the first gesture posture, the cockpit device to be adjusted from the first state to the second state comprises:
controlling, based on the first gesture posture, a device that is in the cockpit device and that is associated with the first area to be adjusted from the first state to the second state.

11. The method according to any one of claims 1 to 10, wherein duration of the first mode is first duration, and the method further comprises:
when the first duration ends, prompting, by using an alarm, the user to disable the first mode;
and
based on a second gesture posture of the user, controlling the alarm to be turned off, or controlling the alarm to perform delay prompt.

12. The method according to any one of claims 1 to 11, wherein the second state adapts to the human body posture information.

13. The method according to any one of claims 1 to 12, wherein the first mode is a nap mode, a sleep mode, a rest mode, or a camping mode.

14. A control apparatus, comprising:
a detection unit, configured to detect that a first mode is enabled, wherein the first mode is a mode related to user resting in a cockpit of a transportation means, the cockpit comprises a cockpit device, and the cockpit device comprises at least one of a seat, a fragrance, a sound-generation apparatus, a light apparatus, an air conditioner, and a display apparatus;
a control unit, configured to control the cockpit device to be in a first state; and
an obtaining unit, configured to obtain human body posture information, wherein
the control unit is further configured to control, based on the human body posture information, the cockpit device to be adjusted from the first state to a second state.

15. The apparatus according to claim 14, wherein the obtaining unit is further configured to obtain a sleep comfort degree, wherein the sleep comfort degree indicates a comfort degree or a sleep depth of a user in a sleep state; and
the control unit is further configured to control, based on the human body posture information and the sleep comfort degree, the cockpit device to be adjusted from the first state to the second state.

16. The apparatus according to claim 15, wherein the obtaining unit is configured to:
determine the sleep comfort degree based on first data collected by a sensor in the cockpit; or
receive second data sent by a wearable device, and determine the sleep comfort degree based on the second data.

17. The apparatus according to claim 15 or 16, wherein the cockpit device comprises the air conditioner and a temperature of the air conditioner is a first temperature when the cockpit device is in the first state, and the control unit is configured to:
when the human body posture information indicates that the user is in the sleep state, control, based on the sleep comfort degree, the temperature of the air conditioner to be adjusted from the first temperature to a second temperature.

18. The apparatus according to claim 15 or 16, wherein the cockpit device comprises the sound-generation apparatus and a volume of the sound-generation apparatus is a first volume when the cockpit device is in the first state, and the control unit is configured to:
when the human body posture information indicates that the user is in the sleep state, based on the sleep comfort degree, control the volume of the sound-generation apparatus to be adjusted from the first volume to a second volume, or turn off the sound-generation apparatus, wherein the second volume is less than the first volume.

19. The apparatus according to any one of claims 14 to 18, wherein the cockpit device comprises the seat, and the control unit is configured to:
control a state of the seat massage function based on the human body posture information.

20. The apparatus according to claim 19, wherein the apparatus further comprises:
a first prompt unit, configured to prompt the user to enable the seat massage function.

21. The apparatus according to any one of claims 14 to 20, wherein the human body posture information comprises an eye status of the user, the cockpit device comprises the display apparatus and luminance of the display apparatus is first luminance when the cockpit device is in the first state, and the control unit is configured to:
when the eye status indicates that the user is in an eye-closed state, control the luminance of the display apparatus to be adjusted from the first luminance to second luminance, or turn off the display apparatus, wherein the second luminance is less than the first luminance.

22. The apparatus according to any one of claims 14 to 21, wherein the human body posture information comprises a first gesture posture of the user, and the control unit is configured to:
control, based on the first gesture posture, the cockpit device to be adjusted from the first state to the second state.

23. The apparatus according to claim 22, wherein the cockpit comprises a first area, the user is located in the first area, and the control unit is configured to:
control, based on the first gesture posture, a device that is in the cockpit device and that is associated with the first area to be adjusted from the first state to the second state.

24. The apparatus according to any one of claims 14 to 23, wherein duration of the first mode is first duration, and the apparatus further comprises:
a second prompt unit, configured to: when the first duration ends, prompt, by using an alarm, the user to disable the first mode, wherein
the control unit is further configured to: based on a second gesture posture of the user, control the alarm to be turned off, or control the alarm to perform delay prompt.

25. The apparatus according to any one of claims 14 to 24, wherein the second state adapts to the human body posture information.

26. The apparatus according to any one of claims 14 to 25, wherein the first mode is a nap mode, a sleep mode, a rest mode, or a camping mode.

27. A control apparatus, comprising:
a memory, configured to store a computer program; and
a processor, configured to execute the computer program stored in the memory, to enable the apparatus to perform the control method according to any one of claims 1 to 13.

28. A control system, comprising a cockpit device and a computing platform, wherein the computing platform comprises the apparatus according to any one of claims 14 to 27, and the cockpit device comprises at least one of a seat, a fragrance, a sound-generation apparatus, a light apparatus, an air conditioner, and a display apparatus.

29. A transportation means, comprising the control apparatus according to any one of claims 14 to 27, or comprising the control system according to claim 28.

30. The transportation means according to claim 29, wherein the transportation means is a vehicle.

31. A computer-readable storage medium, wherein the computer-readable storage medium stores a computer program, and when the computer program is executed by a computer, the control method according to any one of claims 1 to 13 is implemented.

32. A chip, wherein the chip comprises a processor and a data interface, and the processor reads, through the data interface, instructions stored in a memory, to perform the control method according to any one of claims 1 to 13.
